(19) **Europäisches Patentamt / European Patent Office / Office européen des brevets**

(11) **EP 3 552 129 B1**

(12) **FASCICULE DE BREVET EUROPEEN**

(45) Date de publication et mention de la délivrance du brevet:
**23.08.2023 Bulletin 2023/34**

(21) Numéro de dépôt: **17804571.2**

(22) Date de dépôt: **28.11.2017**

(51) Classification Internationale des Brevets (IPC):
**G06F 21/10** *(2013.01)* **G06F 21/16** *(2013.01)*

(52) Classification Coopérative des Brevets (CPC):
**G06F 21/10; G06F 21/16;** G06F 2221/0733

(86) Numéro de dépôt international:
**PCT/EP2017/080731**

(87) Numéro de publication internationale:
**WO 2018/104114 (14.06.2018 Gazette 2018/24)**

(54) **PROCÉDÉ D'ENREGISTREMENT D'UN CONTENU MULTIMÉDIA, PROCÉDÉ DE DÉTECTION D'UNE MARQUE AU SEIN D'UN CONTENU MULTIMÉDIA, DISPOSITIFS ET PROGRAMME D'ORDINATEURS CORRESPONDANTS**

VERFAHREN ZUM AUFZEICHNEN EINES MULTIMEDIA-INHALTS, VERFAHREN ZUM ERFASSEN EINER MARKIERUNG IN EINEM MULTIMEDIA-INHALT, ENTSPRECHENDE VORRICHTUNGEN UND COMPUTERPROGRAMME

METHOD FOR RECORDING A MULTIMEDIA CONTENT, METHOD FOR DETECTING A MARK WITHIN A MULTIMEDIA CONTENT, CORRESPONDING DEVICES AND COMPUTER PROGRAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.12.2016 FR 1662087**

(43) Date de publication de la demande:
**16.10.2019 Bulletin 2019/42**

(73) Titulaire: **Lamark**
**35000 Rennes (FR)**

(72) Inventeurs:
• **CHAPPELIER, Vivien**
**35250 Saint-Aubin-D'Aubigne (FR)**
• **DESOUBEAUX, Mathieu**
**35000 Rennes (FR)**
• **DELHUMEAU, Jonathan**
**35000 Rennes (FR)**

(74) Mandataire: **Vidon Brevets & Stratégie**
**16B, rue de Jouanet**
**BP 90333**
**35703 Rennes Cedex 7 (FR)**

(56) Documents cités:
FR-A1- 2 860 378          US-A1- 2008 270 373
US-A1- 2016 196 631

## Description

### 1. Domaine

L'invention se rapporte à la protection des contenus multimédia. Plus particulièrement, il est question de protéger les contenus multimédias soumis à des droits d'auteur. Plus spécifiquement encore il est proposé une méthode d'enregistrement, au sein d'un système de d'enregistrement et de détection, de contenus multimédia en mettant en oeuvre une technique d'enregistrement particulière. Il est également proposé une méthode de détection de contenus multimédia précédemment enregistrés. La présente technique permet plus particulièrement de lier de manière très forte un contenu multimédia à un ensemble de données de surveillance. Un domaine d'application typique de la présente invention est la gestion de contenus protégés par le droit d'auteur.

### 2. Art antérieur

Le développement des échanges de données au travers des réseaux de communication et plus particulièrement au travers d'Internet a entrainé une diffusion massive de contenus multimédias. Or de nombreux contenus sont soumis à des droits d'auteur. Ainsi, depuis de plusieurs années, des recherches intensives ont été menées afin de permettre une identification des contenus soumis à des droits d'auteur. L'identification et le suivi des contenus est une charge qui incombe à des entités de gestion de droits d'auteur, qui doivent mettre en oeuvre principalement deux tâches différentes :

- identifier le contenu : le contenu examiné est identifié comme une copie d'une oeuvre dont les auteurs et les droits voisins sont gérés par une entité de gestion de droits ;
- vérifier le droit: une approche traditionnelle, consiste à accorder un droit d'exploitation pour un usage donné de l'Œuvre. Les détenteurs des droits d'auteur doivent donc contrôler que le contenu examiné est utilisé en conformité avec le droit géré qui a été négocié ; si cela n'est pas le cas, il s'agit d'une violation des droits d'auteur ; ceci souligne qu'un contenu multimédia peut être exploité de différentes façons par de nombreux clients différents.

Cette mise en oeuvre des droits d'auteur est rendue encore plus difficile par la mutation des droits, car un droit peut évoluer avec le temps: un client peut par exemple négocier une prolongation de temps de l'exploitation d'une l'œuvre ou un éditeur négocie en utilisant l'œuvre pour un usage différent de celui prévu à l'origine. L'objectif, pour effectuer une gestion efficace des droits d'auteur est de lier fortement un contenu et des données descriptives relatives à ce contenu. On observe deux grandes classes de méthodes de création de ces « liens » :

- la première classe de méthodes consiste en la mise en oeuvre d'un marquage particulier (appelé tatouage) du contenu multimédia : le contenu est marqué (tatoué) avant sa diffusion et le tatouage comprend des données descriptives ;
- la deuxième classe de méthode consiste en une récupération basée sur le contenu: également appelé CBR *(« Content Based Retrieval »)* permet aux ordinateurs de reconnaître le contenu et de rechercher, en base de données, les données descriptives associées à ce contenu.

La récupération basée sur le contenu (CBR) se déroule en deux phases: *une phase d'inscription et une phase de reconnaissance.* Le principe de cette technologie consiste à extraire, à partir d'un morceau (d'une partie) d'un contenu, une représentation compacte de son contenu visuel et/ou auditif. Cette représentation compacte prend la forme d'un vecteur ou d'un ensemble de vecteurs. Cette représentation est discriminatoire (deux morceaux de contenu non similaires ont des représentations très différentes) tout en étant robuste (des quasi copies d'un contenu partagent en règle générale des représentations similaires).

Les problèmes présentés par le CBR sont de deux ordres :

1) faux positif et faux négatif: en fonction de la similitude entre leurs représentations, le système doit indiquer si la requête est une copie d'une image de la base de données (i.e. l'image qui présente la meilleure similarité) : ce choix est généralement résolu en comparant la similarité à un seuil ; cependant, un seuil trop élevé conduit à plus de faux négatifs: le système ne reconnaît pas les copies déformées du contenu de la base de données ; à l'inverse, un seuil trop bas conduit à plus de faux positifs: le système reconnaît les requêtes alors qu'elles ne correspondent à aucun contenu de la base de données ; ce problème devient plus critique à mesure que le nombre de contenus gérés dans la base de données grandi ; de plus, le système ne distingue pas deux contenus de base de données qui sont similaires: par exemple, des images prises à partir du même événement par deux photographes proches sont considérés comme étant un contenu identique ;
2) sources multiples: un système CBR échoue à extraire des données descriptives correctes lorsque plusieurs versions d'un même contenu existent, chacune avec des données descriptives associées ; par exemple, lorsque deux agences de photos gèrent les droits d'une même image, le système identifie l'Œuvre mais il n'est pas en mesure de spécifier quelle version de l'œuvre est identifiée, et donc pas en mesure d'obtenir les données descriptives correctes correspondant à la version en question.

Une deuxième technique de gestions de droits peut consister à marquer le contenu. Cette technique porte le nom de tatouage numérique. Comme explicité précédemment, un problème du CBR est de ne pas pouvoir efficacement séparer deux versions différentes d'un même contenu. Le tatouage numérique incorpore de façon permanente les données descriptives dans un morceau de contenu en modifiant certaines valeurs du contenu (par exemple le pixel pour les images fixes). Le système chargé du tatouage produit des contenus tatoués dont la perception est identique à celle des oeuvres originales grâce à un modèle mathématique de tatouage qui tient compte du système visuel et/ou auditif humain.

Le tatouage numérique pose également des problèmes :

1) *compromis entre la charge utile et la robustesse:* la charge utile est définie comme la longueur du message incorporé; par exemple, c'est le nombre de bits codant le message à intégrer ; la robustesse est définie comme la capacité pour le décodeur de tatouage de récupérer le message incorporé malgré une modification du contenu tatoué; un des problèmes du tatouage est qu'il existe un compromis à faire entre la charge utile et la robustesse: plus le message tatoué est long, moins il est probable de réussir à décoder le message correct après une distorsion;

2) *robustesse contre les attaques géométriques:* en prenant l'exemple d'un tatouage d'images fixes : il existe des techniques de tatouage offrant une très bonne robustesse contre la compression, le filtrage, l'étalonnage des couleurs ou le bruit; de telles modifications sont appelées traitement *« volumétrique »* puisqu'elles modifient la valeur des pixels de l'image ; il existe des techniques de tatouage offrant une bonne robustesse contre les attaques géométriques, qui modifient la géométrie de l'image comme la rotation, le redimensionnement, le recadrage; cependant, très peu de techniques de tatouage résistent à ces deux types d'attaques combinées ;

3) *caractère permanent du message*: un autre problème, pour certaines applications, est que le message incorporé ne peut pas être facilement modifié; une solution consiste à retrouver le contenu d'origine et insérer, dans ce contenu d'origine, une nouveau tatouage ; une seconde solution est d'incorporer un deuxième tatouage dans un contenu déjà tatoué : cette deuxième solution dégrade la qualité perceptuelle du contenu; en outre au stade du décodage, il n'est pas possible de dire lequel des deux messages est le nouveau;

4) *problème de sécurité*: un système de tatouage numérique a besoin d'une clé secrète: il s'agit d'un paramètre secret qui est utilisé lors du tatouage et lors du décodage : ce paramètre n'est pas public et ceci empêche la lecture, la modification ou l'effacement des messages incorporés par des utilisateurs non autorisés ; cependant, certains travaux de recherche montrent que les niveaux de sécurité des systèmes de tatouage sont faibles: cela signifie qu'en traitant plusieurs contenus (de l'ordre de 100) tatoués avec la même technique et la même clé secrète mais avec des messages différents, un attaquant peut entrer en possession de la clé secrète.

Il existe donc un besoin de fournir une solution d'identification et de suivi de contenus multimédia, qui soit à la fois robuste et efficace et qui résolve au moins certains des inconvénients de l'art antérieur.

Le document FR2860378 A1 décrit un procédé de vérification d'entités multimédia pour déterminer si une première entité multimédia correspond à une seconde entité multimédia, le procédé comportant une étape de sélection dans une pluralité de secondes entités multimédia, par une recherche basée sur le contenu, d'un ensemble de secondes entités multimédia proches de la première entité multimédia, et une étape de décision sur une correspondance entre la première entité multimédia et au moins une seconde entité multimédia de l'ensemble de secondes entités multimédia, à partir d'une comparaison entre la première entité multimédia et les secondes entités multimédia de l'ensemble.

## 3. Résumé

La présente technique ne comprend pas au moins certains des inconvénients de l'art antérieur. La technique proposée permet d'effectuer une identification et un suivi de contenu multimédia soumis à droit d'auteur de manière simple et efficace. Plus particulièrement, il est proposé une méthode combinant des caractéristiques des méthodes antérieures, mais d'une façon tout à fait nouvelle et inventive, et ce pour produire un système pour lequel il n'est pas nécessaire d'établir un compromis entre robustesse et efficacité.

L'invention est définie par un procédé selon la revendication 1, par un système selon la revendication 9 et par un produit programme d'ordinateur selon la revendication 11.

Les revendications dépendantes définissent des modes de réalisation de l'invention.

Selon une implémentation préférée, les différentes étapes des procédés des revendications à 8 sont mises en oeuvre par un ou plusieurs logiciels ou programmes d'ordinateur, comprenant des instructions logicielles destinées à être exécutées par un processeur de données d'un module relais selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de l'invention.

## 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

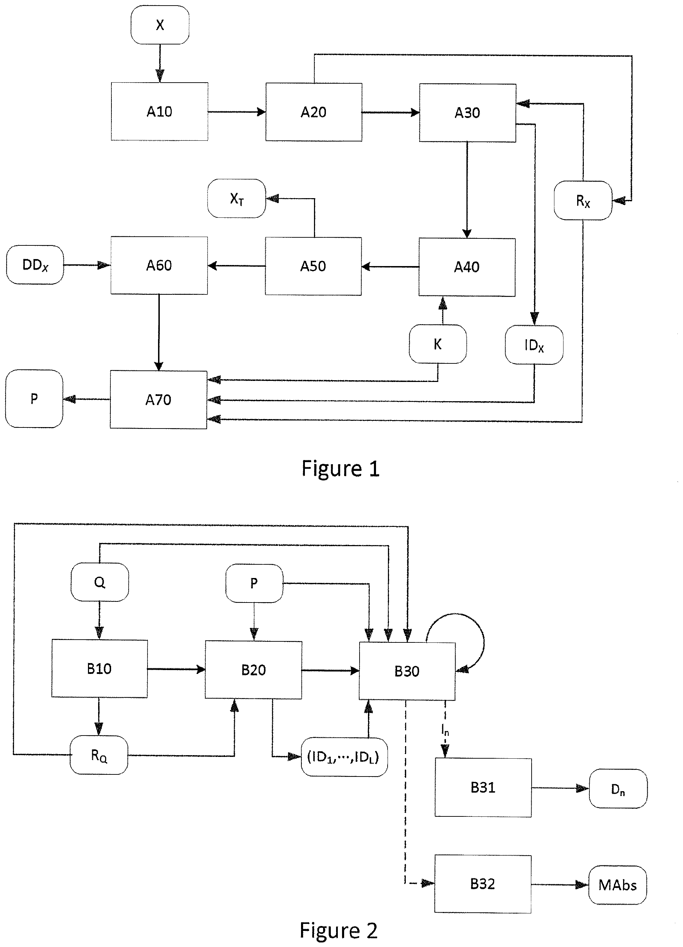

-   la figure 1 présente un synoptique de la technique proposée, dans la phase indépendante d'enregistrement de contenu multimédia ;
-   la figure 1 présente un synoptique de la technique proposée, dans la phase indépendante d'obtention d'information descriptive de contenu multimédia ;
-   la figure 3 décrit un dispositif d'enregistrement apte à mettre en oeuvre l'enregistrement de contenus multimédias ;
-   la figure 4 décrit un dispositif de vérification, apte à vérifier l'éventuelle contrefaçon d'un contenu multimédia.

## 5. Description

### 5.1. Rappels

Comme explicité précédemment, il est question de faciliter l'enregistrement et le suivi de contenus multimédias (images, sons, vidéo) diffusés sur un réseau de communication de type Internet. L'approche retenue par les inventeurs consiste globalement à combiner des caractéristiques des systèmes de récupération basée sur le contenu et des systèmes de tatouage numériques afin de proposer un enregistrement et un suivi nouveaux et inventifs.

Les méthodes et les systèmes objets de la présente empruntent aux techniques antérieures l'approche en deux temps consistant à enregistrer un contenu à protéger puis à effectuer un suivi de contenu pour, par exemple identifier des contenus potentiellement contrefaisants ou encore enrichir des bases de données existantes. En revanche, l'approche retenue dans la présente diffère des techniques antérieures en ce que l'enregistrement du contenu comprend le marquage de celui-ci préalablement à sa diffusion. L'approche retenue diverge également lors du suivi des contenus puisque ce suivi comprend également l'identification d'un marquage : celui-ci permet l'obtention des données descriptives auprès de la base de données d'enregistrement.

Plus particulièrement, grâce à la présente technique, le marquage effectué lors de l'enregistrement du contenu ne nécessite pas de compromis entre robustesse et charge utile et il diminue ainsi drastiquement la probabilité de détection de faux négatifs et/ou de faux positifs des systèmes CBR : en effet, comme le tatouage numérique ne porte pas les données descriptives (comme dans l'art antérieur), il est possible d'intégrer un tatouage numérique très robuste et donc il est possible de détecter une contrefaçon du contenu de manière beaucoup plus efficace.

Par ailleurs, l'enregistrement est simple : en une seule phase d'enregistrement on met en oeuvre d'une part une technique d'enregistrement et d'autre part une technique de tatouage. La technique d'enregistrement a pour objectif de référencer les contenus à protéger. Ce référencement est réalisé de manière spécifique afin de s'assurer d'une certaine robustesse du tatouage qui est réalisé durant la phase d'enregistrement. En fonction des modes de réalisation, le tatouage est quant à lui mis en oeuvre de manière à être robuste aux attaques connues : ceci passe par une minimisation du message contenu dans le tatouage, permettant ainsi d'en augmenter la robustesse.

D'un point de vue général, la présente technique comprend deux aspects, indépendants, mais complémentaires, que sont d'une part l'enregistrement, au sein d'une base de données, d'un contenu à protéger et d'autre part la détection d'une copie de ce contenu multimédia. Ces deux aspects sont décrits en relation avec les figures 1 et 2.

Plus particulièrement, la figure 1 décrit un Procédé d'enregistrement d'un contenu multimédia à protéger au sein d'un dispositif électronique d'enregistrement de contenus multimédia, le dispositif électronique comprenant des moyens de traitement de données multimédia. Le procédé d'enregistrement comprend :

- une étape de réception (A10) d'un contenu multimédia X ;
- une étape d'obtention (A20) d'une représentation $R_X$ du contenu multimédia X, la représentation $R_X$ étant issue d'au moins une transformation opérée sur le contenu multimédia X;
- une étape d'obtention (A30) d'un identifiant unique ($ID_X$) associé à la représentation $R_X$ du contenu multimédia ;
- une étape d'obtention (A40) d'une clé secrète (K) du contenu multimédia ;
- une étape de tatouage (A50) du contenu multimédia (X) à l'aide d'une clé secrète (K), délivrant un contenu tatoué ($X_T$) ;
- une étape d'obtention (A60) d'au moins une donnée descriptive $DD_X$ associée audit contenu multimédia ;
- une étape d'insertion (A70), au sein d'une base de données (P, P), d'au moins une donnée constitutive du tatouage et de la donnée descriptive ($DD_X$).

Par exemple, on insère, au sein de la base de données (P), d'un enregistrement comprenant l'identifiant unique ($ID_X$), la représentation $R_X$ et la clé secrète $K$.

Ainsi, on bénéficie d'un avantage intéressant par rapport aux systèmes d'enregistrements existants puisque les données qui sont utilisées pour effectuées le tatouage sont également enregistrées en base. Bien que le procédé puisse être mis en oeuvre de manière linéaire, comme exposé précédemment, les étapes d'obtention de données descriptives et d'insertion dans la base de données peuvent être mises en oeuvre de façon indépendantes du calcul effectif du tatouage. En d'autres termes, le calcul du tatouage (étapes A10 à A50), peut être effectué sur un dispositif (par exemple un dispositif de prise de vue, un dispositif client), tandis que l'insertion en base peut être effectuée sur un autre dispositif (serveur par exemple), à partir des données transmises depuis le dispositif client.

La figure 2 décrit un procédé d'obtention d'une donnée descriptive associée à un contenu multimédia Q, procédé mis en oeuvre par un dispositif électronique de vérification de contenu multimédia, le dispositif électronique comprenant des moyens de traitement de données multimédia. Le procédé d'obtention comprend les étapes suivantes :

- obtention (B10) d'une représentation $R_Q$ du contenu Q.
- recherche (B20), au d'une base de données (P, P), des représentations R les plus proches de la représentation $R_Q$ du contenu Q, recherche délivrant une liste ordonnée d'identifiants de représentations candidates les plus proches ($ID_1,\cdots,ID_L$) ;
- pour chaque contenu candidat de la liste ordonnée précédemment obtenue, une étape de détection (B30), au sein du contenu Q et/ou de la représentation $R_Q$, d'un tatouage numérique correspondant à l'un des tatouages numériques des contenus de la liste ($ID_1,\cdots,ID_L$) ; et

    - lorsque la détection est positive, pour une contenu $I_n$ de la liste des contenus ($I_1,\cdots,I_L$), transmission (B31) d'au moins une portion des données descriptives $D_n$ du contenu $I_n$ auquel le tatouage du contenu Q correspond ;
    - lorsque la détection est négative pour toutes les contenus de la liste des contenus ($I_1,\cdots,I_L$), transmission (B32) d'un message absence du contenu Q (MAbs).

Ainsi, la technique permet d'enregistrer des contenus à surveiller et de retrouver aisément un contenu contrefaisant, parmi ces contenus surveillés,

Une autre application de la présente technique est l'augmentation d'informations liées à un contenu, dans lequel le contenu lui-même est utilisé comme un lien direct vers des contenus supplémentaires connexes tels qu'un lien vers un site web externe du fournisseur de contenu, un bouton d'achat ou une Image, une vidéo, texte ou son. Cette application nécessite également d'identifier le contenu d'une manière sécurisée et certifiée. L'avantage avec la technique proposée est que la quantité de données descriptives n'est pas limitée, contrairement aux techniques de tatouage antérieures : il est tout à fait envisageable de disposer d'une quantité importante de données descriptives, sans nuire à l'efficacité de la protection apportée au contenu.

Les données descriptives peuvent être de deux ordres : des données descriptives permanentes et des données descriptives temporaires, comme cela est explicité ci-après.

Le système procure les avantages suivants : En premier lieu, les méthodes d'enregistrement et de suivi proposées améliorent grandement la robustesse du tatouage grâce à plusieurs éléments :

- elles bénéficient de l'enregistrement structurel offert par la technologie CBR, qui est réalisée avant la détection du tatouage. Cela permet de sélectionner une technique de tatouage qui est plus faiblement robuste contre les attaques de désynchronisation mais très robuste contre les attaques valumétriques.

- il n'y a pas de message à insérer dans l'image (et donc dans le tatouage) mais juste une marque : cela permet d'utiliser des techniques de tatouage à zéro bit d'information, plus robustes.

- l'étape de tatouage, pouvant faire intervenir une pluralité de clés secrètes, et sélectionnant la meilleure (celle qui offre plus de robustesse) permet en quelque sorte d'adapter le tatouage au contenu, comme cela est présenté par la suite ; de plus, en enregistrant, en base de données, uniquement l'index de cette clé secrète, on teste uniquement la détection d'une clé secrète, ce qui ne modifie pas la probabilité d'un faux positif ;

- enfin, au stade de la détection, le système peut avoir accès au contenu original, ce qui permet d'utiliser des techniques de tatouage informées, qui sont beaucoup plus robustes que les techniques de tatouage non-informées.

En deuxième lieu, dans la mesure où les données descriptives d'une part ne sont pas intégrées dans le tatouage et d'autres part sont dissociées du contenu lui-même, l'utilisateur peut lier au contenu autant de données descriptives qu'il le souhaite. En outre, les informations liées au contenu ne sont pas liées à la technique du tatouage et peuvent donc être de toute nature (autres médias, contenus sociaux, etc.) et modifiées dans le temps.

En troisième lieu, à la différence du tatouage numérique classique, il est simple de modifier les données descriptives associées à un contenu (ou à une version d'un contenu). En effet, cette modification requiert une simple modification en base de données, sans qu'il soit nécessaire de modifier le tatouage numérique lui-même. La présente résout donc aisément cette problématique d'identification liée au tatouage.

En quatrième lieu, la méthode de suivi employée reconnaît un contenu et produit des données descriptives pertinentes (associées au contenu reconnu) si et seulement si l'identification est validée à la fois par la recherche descriptive (la recherche basée sur les représentations) et par la détection du tatouage correspondant. Cela permet d'étendre la liste des bons candidats à des contenus qui seraient moins similaires. Ceci diminue donc le nombre de faux négatifs, sans augmenter le nombre de faux positifs grâce à la validation croisée de la détection de tatouage. Les techniques antérieures ne produisent clairement pas cet effet, obtenu par la synergie de la recherche descriptive et du tatouage.

En dernier lieu, le système est en mesure de gérer de manière efficace de multiples versions d'un même contenu du fait de l'insertion d'un tatouage numérique différent dans chaque version du contenu. Dès lors, lors du suivi d'un contenu contrefaisant, la phase de décodage du tatouage permet de savoir précisément quelle est la version du contenu qui est contrefactrice, et ce même en présence de plusieurs dizaines de versions différente de ce contenu.

## 5.2. Descriptions d'un mode de réalisation

Dans ce mode de réalisation, la technique est appliquée à la gestion de contenus de type images. Dans ce mode de réalisation, le système qui effectue l'enregistrement est le même que le système qui effectue la vérification des contenus. Un tel système se présente sous la forme d'un serveur, comprenant des moyens de mise en oeuvre des méthodes décrites et comprenant notamment des moyens d'écriture et de lecture de bases de données ; des moyens de chiffrements, comprenant notamment des moyens de gestion de clés de chiffrement, des moyens de chiffrement de messages. Le système comprend également au moins une base de données, accompagnée d'un gestionnaire de base de données correspondant. Dans ce mode de réalisation, on dispose d'une base d'enregistrement P et d'une structure d'indexation IdxS qui sont utilisées de manière différente : l'une pour les données de tatouage et l'autre pour les données descriptives.

Le procédé d'enregistrement, dans ce mode de réalisation, comprend les étapes suivantes :

- transmission, audit serveur, d'une image / à enregistrer et de données descriptives D de cette image *(les données descriptives peuvent être directement intégrées à cette image)* ; lorsque plusieurs versions du contenu existent, au moins certaines des données descriptives sont différentes pour chacune des versions ;

- calcul, par le serveur, d'une représentation $R$ de l'image $I$, et calcul à partir de cette représentation d'un identifiant unique $IDI$ de l'image $I$ ;

- sélection, parmi une pluralité de clé, d'une clé secrète $K$, associée audit identifiant unique de l'image $IDI$ ;

- première insertion, dans une table de contenus (TC) de la base de données d'enregistrement P, d'un enregistrement correspondant à l'image I et aux données descriptives D et comprenant ledit identifiant unique IDI, ladite clé secrète K et ladite représentation R ; dans au moins une variante, le couple {IDI, K} forme la clé primaire de l'enregistrement (« primary key »).

- deuxième insertion, dans une structure d'indexation (IdxS) de la base de données, d'un enregistrement comprenant ledit identifiant unique IDI et ladite représentation R, de telle sorte que l'identifiant unique IDI est considéré comme un bon candidat quand une représentation courante (d'un contenu courant à comparer) est similaire à la représentation R ;
on note que la structure d'indexation (IdxS) peut très bien être la table de contenus (TC) elle-même, de sorte que cette deuxième étape d'insertion est comprise dans la première étape d'insertion ;
- création d'un signal de tatouage numérique, dans l'espace de représentation de l'image I, à partir de la clé secrète K (Par exemple domaine de Transformation d'ondelettes discrètes ou domaine Transformation de cosinus discrète), signal qui est mixé avec la représentation d'origine de l'image I, délivrant une image tatouée Iw ;
- transmission de l'image tatouée Iw et optionnellement de l'identifiant unique IDI, à l'utilisateur et/ou au système et/ou au dispositif qui a soumis l'image au dispositif d'enregistrement; en règle générale, en effet, il n'y a pas de transmission de l'identifiant unique à l'utilisateur final (ni à d'éventuels partenaires), mais uniquement une transmission de l'image tatouée Iw, qui suffit, selon l'invention, à obtenir les données descriptives aux données en interrogeant le système ; d'une certaine manière, l'image tatouée Iw est elle-même la clé d'accès aux données associées à l'image.

Comme on peut le constater, l'enregistrement délivre une image tatouée Iw et au moins une entrée, dans une table d'une base de données, correspondant à l'image d'origine de cette image tatouée.

Lors de la vérification, d'un contenu supposé contrefaisant Q, la méthode mise en oeuvre au sein du système précédemment présenté est la suivante :

- calcul d'une représentation $R_Q$ de l'image Q.
- recherche, au sein de la structure d'indexation (IdxS), des représentations R les plus proches de la représentation $R_Q$ de l'image Q, recherche délivrant une liste ordonnée de des identifiants des représentations candidates les plus proches $(ID_1, \cdots, ID_L)$ ;
- pour chaque image candidate de la liste ordonnée précédemment obtenue, une étape de détection, au sein de l'image Q d'un tatouage numérique correspondant à l'un des tatouages numériques des images de la liste $(ID_1, \cdots, ID_L)$ ; et

  - lorsque la détection est positive, pour une image $I_n$ de la liste des images $(I_1, \cdots, I_L)$ transmission d'au moins une portion des données descriptives $D_n$ de l'image $I_n$ auquel le tatouage de l'image Q correspond ;
  - lorsque la détection est négative pour toutes les images de la liste des images $(I_1, \cdots, I_L)$, transmission d'un message absence de l'image Q.

Ainsi, on constate que la détection d'une image n'est pas uniquement basée sur la présence ou non de l'image en base par rapport à sa représentation ou uniquement par rapport à la présence d'un tatouage numérique : au contraire cette détection est réalisée sur la base de la combinaison de l'utilisation d'une représentation enregistrée en base de données *et* d'un tatouage numérique. Ceci a pour effet d'augmenter les chances de découverte d'une contrefaçon car la liste des candidats peut être allongée (par rapport aux systèmes existants) et il est possible d'utiliser des procédés de tatouages très résistants aux attaques.

Plus particulièrement, dans ce mode de réalisation, l'étape de détection, au sein de l'image Q d'un tatouage numérique correspondant à un tatouages numériques d'une image $I_m$ de la liste $(ID_1, \cdots, ID_L)$ comprend :

- obtention de la clé secrète $K_m$ correspondant à l'$ID_m$ de l'image $I_m$ ;
- optionnellement, réalignement de l'image Q en fonction des éléments structurels de la représentation $R_m$ de l'image $I_m$ ;
- détection du tatouage à l'aide de la clé secrète $K_m$ et optionnellement de l'image $I_m$ (cas d'une détection informée, voir plus loin).

Ainsi, dans ce mode de réalisation, plusieurs caractéristiques sont mises en oeuvre pour fournir un enregistrement et une détection efficace :

*Au niveau du système d'enregistrement de contenu :*

- on calcule une représentation compacte et discriminative du contenu ;
- on fournit une mesure de la similarité entre une requête et les représentations de la base de données ;
- on fournit une recherche efficace (rapide et évolutive) qui, à partir d'une représentation d'une requête, recherche les représentations dans la base de données ayant les plus grandes similitudes à l'aide de la structure d'indexation ;
- comme la liste des candidats est ordonnée, la recherche du tatouage tient compte d'une « probabilité » de succès, et est donc plus efficace (évite de rechercher des tatouages au hasard);
- on calcule la représentation qui comprend des éléments structurels ; cela correspond à des éléments spatiaux (ou temporels, spatiaux et temporels) de l'image fixe (respectivement un clip audio ou un clip vidéo) ; ces éléments structurels peuvent être exploités pour enregistrer deux contenus similaires à partir de leur représentation.

*Au niveau du tatouage numérique :*

- on met en oeuvre un mécanisme de tatouage numérique résistant aux attaques, par exemple de type « zéro bit » comprenant deux parties: l'intégration et la détection ;
- les tatouages intégrés aux images sont robustes ;
- comme la mise en oeuvre du tatouage ne prend comme entrée que le contenu (par exemple l'image I) et une clé secrète K, l'image tatouée produite ($I_w$) ne porte pas d'autres informations que ce tatouage et n'est donc pas sensible à des procédés de détection de tatouage basées sur des messages (par exemple les données descriptives) intégrés, comme dans l'art antérieur ;
- la détection prend comme entrée un contenu de requête transformé et une clé secrète, et optionnellement le contenu d'origine correspondant à cette clé secrète. Il produit une décision binaire (Oui ou Non) et une mesure optionnelle de la probabilité de cette décision, comme la probabilité de « faux positif », c'est-à-dire la probabilité d'une décision positive lors de l'analyse du contenu non tatoué ou non tatoué avec cette clé secrète.

    - plus particulièrement, avec cette technique, pour générer un faux-positif, il faudrait d'une part que les représentations des deux images en cours de comparaison soient similaires *et* d'autre part que sur la base de cette similarité, par « hasard » la clé secrète permette de retrouver un signal de tatouage numérique correspondant ;
    - on réduit donc de manière drastique, avec cette technique, la probabilité d'obtention d'un faux positif.

## 5.3. Autres caractéristiques et avantages

On présente ci-après plusieurs caractéristiques complémentaires qui peuvent être astucieusement mises en oeuvre en fonction des modes de réalisation effectivement mise en oeuvre.

## 5.3.1. Localisation de la phase d'enregistrement et de tatouage

Comme cela a été exposé précédemment, l'instanciation d'un lien entre un contenu et ses données descriptives est réalisée en deux étapes distinctes comprenant:

- le tatouage du contenu donné en utilisant une clé secrète (astucieusement choisie) ;
- l'enregistrement du contenu (original) et de cette clé secrète dans la base de données pour une un suivi (tracking) ultérieur.

Dans au moins un mode de réalisation, deux possibilités sont offertes pour effectuer l'enregistrement : l'enregistrement peut soit être réalisé sur une plateforme en ligne soit réalisé hors ligne.

*5.3.1.1. Enregistrement en ligne*

Le mode d'enregistrement en ligne consiste à effectuer l'enregistrement directement à partir d'un service en ligne proposé par le serveur d'enregistrement. L'utilisateur télécharge le contenu à protéger par l'intermédiaire du service en ligne et récupère la copie tatouée de ce contenu. Il peut également éditer les données descriptives associées au contenu directement depuis le service en ligne.

Dans ce mode de réalisation, le service en ligne génère d'abord une clé secrète K et stocke optionnellement le contenu d'origine sur la plate-forme. Il applique alors un tatouage dérivé de la clé secrète K au contenu et stocke à la fois la clé secrète et un identifiant de contenu *IDI* associé uniquement au contenu d'origine et à l'utilisateur.

Le contenu tatoué est transmis à l'utilisateur, et peut optionnellement être directement partagé avec d'autres personnes via les options de partage fournies par le service en ligne. L'avantage de ce système est de fournir une interface unifiée à l'utilisateur pour créer le lien entre données descriptives et contenu, enregistrer ces données descriptives et partager le contenu.

*5.3.1.2. Enregistrement hors ligne*

Comme cela ressort de la présente technique, un contenu est lié de manière unique à ses données descriptives dès qu'il est tatoué. Il ressort aussi clairement de l'exposé précédent que le tatouage n'est pas directement déduit des données descriptives, comme dans l'art antérieur.

Par conséquent, le tatouage offre une protection de la propriété du contenu ou d'autres données descriptives telles qu'une date et un lieu de capture, par l'intermédiaire de la propriété de la clé secrète K qui a été utilisée pour le générer. Ainsi, il suffit d'enregistrer cette clé K plus tard pour promouvoir la propriété de la liaison et par conséquent pour que le contenu tatoué soit effectivement associé aux données descriptives correspondantes enregistrées avec cette clé.

Cela permet de mettre en oeuvre une procédure en deux étapes dans laquelle le contenu est tatoué hors ligne, dans un système embarqué, de type smartphone, ordinateur personnel ou serveur tiers et enregistré ultérieurement sur la plate-forme d'enregistrement. L'avantage de scinder les deux étapes est que le contenu peut être protégé dès qu'il est capturé, sans nécessiter de connectivité réseau et sans encourir de charge informatique sur les serveurs de plate-forme d'enregistrement. Par ailleurs, une seule sélection de contenu tatoué peut être enregistrée, une fois évaluée sa valeur (commerciale ou autre). Cela permet d'optimiser le nombre d'images enregistrées dans le système d'enregistrement, en limitant l'enregistrement aux images ayant une certaine valeur (commerciale ou autre), tout en protégeant toutes les images potentiellement précieuses qui peuvent encore être enregistrées ultérieurement.

Afin de sécuriser la transmission de la clé de tatouage secrète K du système de tatouage au système d'enregistrement, on peut utiliser une technique de chiffrement asymétrique (système de clés publiques / privées) pour chiffrer la clé secrète avec la clé publique asymétrique fournie par le système d'enregistrement. Lors de l'enregistrement, le système d'enregistrement déchiffre la clé de tatouage secrète K en utilisant la clé privée asymétrique du système de d'enregistrement. Dans ce cas, la clé de tatouage secrète K peut être transportée en toute sécurité le long du contenu d'image tatouée.

Plus particulièrement, dans un mode de réalisation, le tatouage est réalisé dès la prise de vue (par exemple par smartphone à l'aide d'une application de prise de vue adaptée) et la clé secrète chiffrée K est directement intégrée dans les données descriptives JPEG du fichier résultant de la prise de vue. Les fichiers JPEG sont ensuite enregistrés sur la plate-forme d'enregistrement lors d'une étape de synchronisation une fois la connectivité réseau disponible.

### 5.3.2. Tatouage « informé » & tatouage « non informé »

Un détecteur de tatouage vise à détecter la présence de signal spécifique qui a été incorporé dans le contenu de requête reçu, potentiellement transformé. En général, le contenu original n'est pas disponible pour le détecteur, c'est pourquoi la recherche académique porte principalement sur la détection non-informée des tatouages, c'est-à-dire la détection avec seulement la connaissance de la clé secrète K et de la requête Q (c'est-à-dire du contenu à tester). Cependant, dans le système présenté précédemment, on peut aisément stocker le contenu d'origine et l'associer au secret K. Il est en effet généralement nécessaire de stocker au moins une représentation partielle de celui-ci pour s'assurer que l'étape de synchronisation structurelle fonctionne de manière optimale (également appelée étape de réalignement en fonction des informations structurelles). Par conséquent, le contenu d'origine, ou une représentation partielle de celui-ci, peut également être utilisé par le détecteur de tatouage pour améliorer sa confiance dans la détection de la présence ou de l'absence du signal de tatouage. Un tel système est appelé un système de tatouage informé.

Dans cette section, nous présentons les avantages et les inconvénients des deux systèmes dans le contexte typique des applications de l'invention et les caractéristiques spécifiques qui s'appliquent dès lors à l'invention.

#### 5.3.2.1. Tatouage non informé

Un système de tatouage non informé présente l'avantage de ne pas avoir besoin d'accéder au contenu d'origine pour effectuer une détection de tatouage. Seule la clé secrète est nécessaire, réduisant ainsi les exigences de stockage du détecteur à un minimum. Si la signature de contenu utilisée par le système CBR est également petite, cela présente l'avantage de ne nécessiter qu'une petite quantité de mémoire et une faible empreinte pour la base de données de contenu, permettant d'intégrer le détecteur dans un système externe tel qu'un terminal mobile ou de stocker la paire de clés/identifiants dans un système de base de données publique externe tel qu'une chaîne de blocs (blockchain) dans laquelle l'espace de stockage est coûteux. L'utilisation d'une base de données de type blocs de chaînes a l'avantage supplémentaire de chiffrer de façon sûre l'enregistrement, ce qui peut être utilisé pour prouver l'antériorité de la propriété d'une oeuvre protégée par droit d'auteur par exemple. Dans le contexte du tatouage d'images et du CBR, on peut par exemple utiliser de courts descripteurs d'image globaux tels que GIST, ou VLAD, ou des descripteurs basés sur CNN, qui fournissent des représentations de signature efficaces avec des vecteurs à 128 dimensions, compatibles en taille avec une taille de clé de tatouage typique de 128 bits. Avec un tel système, la signature d'image et la clé associée peuvent être codées en seulement quelques dizaines d'octets. Pour cette application particulière, le système de tatouage non renseigné de l'invention fonctionne comme suit.

Pour l'enregistrement et le tatouage du contenu, le contenu est représenté dans un espace transformé, tel que le domaine de transformation en ondelettes discrètes (« *Discrete Watermarking Transform domain* »), où un ensemble de coefficients représentant le signal de contenu sont considérés comme un unique vecteur haute dimension $X$ de dimension $d$. À partir de la clé secrète $K,$ on génère une famille de $L$ vecteurs gaussiens pseudo-aléatoires $E^l \in R^d, l \in [1, L]$ de même dimension $d$, et chaque vecteur est normalisé tel que

$$\|E^l\| = 1, \forall l \in [\![1, L]\!]$$

. Le vecteur X du signal correspondant au contenu est projeté dans l'espace vectoriel défini par cette famille de vecteurs, de telle sorte que $X^l = X.E^l$.

L'indice $c = \mathrm{argmax}_{l \in [\![1,L]\!]} |X^l|$ de la projection de valeur absolue la plus élevée est choisi comme axe du cône de détection et mémorisé dans la base de données avec la clé secrète. Le vecteur de contenu X est alors décomposé dans sa projection sur cet axe et la projection dans l'hyperplan orthogonal à cet axe, telle que $X = x_0 E^c + x_1 E^{c\perp}$, avec $|E^{c\perp}| = 1$ et $E^{c\perp} . E^c = 0$.

En fonction de la puissance d'insertion $\rho$, le signal de contenu est traduit dans cet espace 2D en calculant $y_0 = x_0 + w_0$, $y_1 = x_1 - w_1$. où $w_0$ et $w_1$ sont choisis pour maximiser la robustesse. Ces coordonnées sont alors rétro projetées, conduisant à $Y = y_0 E^c + y_1 E^{c\perp}$, et le signal de tatouage $W$ est égal à $W = Y - X$.

La stratégie d'intégration la plus simple est d'ajouter le signal de tatouage au contenu X pour obtenir le contenu tatoué Z, tel que $Z = X + W$. Cependant, afin d'améliorer à la fois la robustesse et la qualité visuelle, une meilleure stratégie consiste à moduler le signal de tatouage avec le signal de contenu, de sorte que le signal de tatouage est plus fort dans les endroits où le signal de contenu est plus fort; les statistiques du tatouage suivent plus étroitement ceux du contenu original, ce qui rend plus difficile à enlever et plus agréable d'un point de vue visuel. Par exemple, on peut utiliser une fonction de mélange psychovisuelle telle que

$$Zi = Xi + log(1 + |Xi|)Wi, \forall i \in [\![1, d]\!]$$

pour concentrer la puissance du signal de tatouage dans des régions d'intérêt de l'image.

Pour la détection du contenu, sur la base d'un contenu requête, pour déterminer si un tatouage est présent dans le contenu, ce contenu est en premier lieu synchronisé (réalignée) via les informations structurelles du système CBR.

Cela conduit à un contenu transformé qui est de même dimension et aligné sur le contenu d'origine. Ce contenu de requête synchronisé (réaligné) est ensuite transformé dans le même espace de représentation utilisé lors de l'insertion, le domaine de transformation en ondelettes discrètes *(« Discrete Watermarking Transform domain »)*, conduisant à un vecteur de requête Q de dimension d. Étant donné une clé secrète pour tester K, la famille correspondante $E^l$ des vecteurs est générée comme cela a été fait dans l'étape d'enregistrement. Le vecteur Q est projeté dans $Q = q_0 E^c + q_1 E^{c\perp}$, où c est la direction de projection correspondant à la clé K qui est extraite de la base de données. Le module de détection calcule la probabilité d'un faux positif, c'est-à-dire la probabilité que le contenu Q soit tatoué avec la clé K (alors qu'il ne l'est pas), probabilité qui est donnée par :

$$pfa = \beta(\frac{L-1}{2}, \frac{1}{2}, 1 - cos^2(\alpha)),$$

$$cos(\alpha) = \frac{q_0}{\sqrt{q_0^2 + q_1^2}}$$

avec et $\beta$ est la fonction Beta incomplète

Le contenu Q est supposé être un contenu tatoué avec la clé K, lorsque la probabilité calculée est petite, c'est-à-dire par exemple $pfa < 10^{-12}$.

*5.3.2.2. Tatouage Informé*

Le tatouage informé offre l'avantage d'améliorer grandement les résultats de la détection en exploitant la connaissance du contenu original. Il nécessite de stocker le contenu d'origine X avec la clé secrète K dans l'étape d'enregistrement et d'utiliser ce contenu X à l'étape de détection lors du test de la présence du tatouage produit par la clé secrète K. Ce système nécessite plus de stockage que le tatouage non-informé, mais il est également plus robuste. Dans le cas où le système CBR stocke déjà des caractéristiques d'image détaillées pour une récupération et une synchronisation de haute qualité, le coût supplémentaire de stockage du contenu original peut ne pas être problématique et améliore considérablement la qualité globale du système.

Dans cette application, le système de tatouage informé diffère du système non informé comme suit, en utilisant les notations du paragraphe précédent.

À partir de la clé secrète K, on génère un vecteur gaussien pseudo-aléatoire G de dimension d. Il est projeté sur l'hyperplan orthogonal à X et normalisé, tel que

$$W = \frac{G - G.X}{\|G.X\|}.$$

Le vecteur $\rho W$ est utilisé comme signal de tatouage, où $\rho$ est utilisé pour contraindre la distorsion de tatouage, et est combiné avec X pour produire la représentation du contenu tatoué $Z = X + \rho$, ou alors en utilisant des stratégies d'insertion plus avancées basées sur un modèle de système psycho-visuel humain ou psychoacoustique, comme explicité précédemment ci-dessus.

La détection est réalisée en projetant le signal d'interrogation synchronisé Q dans le même hyperplan utilisé pour l'insertion, et en le normalisant, tel que

$$T = \frac{Q - Q.X}{\|Q - Q \cdot X\|}.$$

On peut noter que le contenu d'origine X est requis pour effectuer ce calcul. L'angle entre ce vecteur d'essai T et la direction originale du tatouage W généré à partir de la clé secrète K conduit directement à la probabilité de fausse alarme :

$$pfa = \beta(\frac{d-2}{2}, \frac{1}{2}, 1 - cos^2(\alpha))$$

avec $cos(\alpha) = T.W$ et
$\beta$ est la fonction Beta incomplète

Afin d'améliorer encore la détection, le contenu original peut être utilisé dans l'étape de synchronisation (de réalignement) pour remplir les parties manquantes du contenu dans la requête, dans le domaine spatial ou fréquentiel. En effet, une fois que la requête est synchronisée pour correspondre au contenu d'origine, le système possède des informations partielles sur les parties du signal qui manquent entièrement dans la requête ou ont été lissées en raison du rééchantillonnage (ou d'autres modifications). Par exemple, si le contenu original est une image haute résolution et la requête est un extrait partiel à faible résolution, l'étape de synchronisation fournit la connaissance de toutes les parties du contenu original de l'extrait qui sont totalement absentes de la requête ; l'étape de synchronisation fournit également la connaissance des parties qui sont absentes dans leurs composantes à haute fréquence (la haute fréquence correspondant à la haute résolution). Par conséquent, parmi tous les choix possibles pour compléter les parties manquantes, il est utile de remplir les parties manquantes de la requête avec un signal qui n'introduira pas de bruit supplémentaire dans la détection du tatouage. Étant donné que le signal de tatouage est orthogonal au signal d'origine, l'utilisation du signal d'origine pour remplir les parties manquantes se traduira par une corrélation exactement nulle dans l'espace de tatouage, réduisant le bruit introduit par les parties manquantes au seul bruit dû à la perte du signal de tatouage dans ces régions. Ainsi, la détection du tatouage est effectuée sur le contenu de requête défini par $Q = X - g\,(g^{-1}\,(X)) + g\,(R)$, Où $R$ est le contenu reçu, et $g$ est la transformée structurelle et fréquentielle estimée à partir du contenu reçu $R$ vers le contenu d'origine $X$ et $g^{-1}$ son inverse ou pseudo-inverse.

Grâce à cette technique de complétion, on diminue de manière importante la probabilité d'obtenir un faux positif.

### 5.3.3. Permanence des données descriptives

Le stockage des données descriptives associées au contenu dans une base de données séparée offre l'avantage de permettre l'édition de ces données par le propriétaire du contenu (ou le gestionnaire de droits) à tout moment. Cependant, cette fonctionnalité n'est pas toujours souhaitable, ou peut être limitée à certaines données descriptives et pas d'autres.

Dans ce cas, il est possible de séparer les données descriptives en des données permanentes P et des données descriptives temporaires T. Au cours de l'étape de tatouage, au lieu de générer la clé secrète K de manière aléatoire, les données descriptives permanentes P et un vecteur aléatoire secret V peuvent être haschés pour former la clé secrète $K = h\,(P;\ V)$. Les données descriptives permanentes P et la clé K sont stockées dans la base de données, mais sont des champs en lecture seule, tandis que les données descriptives temporaires T peuvent être lues ou écrites.

Ainsi, dans le cas où les données descriptives permanentes seraient modifiées par une personne malveillante, le hash du secret et les données descriptives permanentes ne correspondraient plus à la clé secrète et le tatouage ne serait pas détecté. Comme on utilise un hachage cryptographique, il est très difficile et peu probable de trouver un nouveau vecteur $V'$ tel que les données descriptives permanentes modifiées P' et V' aient la même valeur $K = h\,(P';\ V')$.

Un tel système empêche donc l'usurpation du lien de contenu en modifiant les informations de données descriptives permanentes et sécurisent le lien entre les données descriptives permanentes et le contenu.

### 5.4. Reconstruction d'un contenu avant détection

En fonction des modes de réalisation, il est envisageable, selon la présente technique, d'effectuer une reconstruction du contenu (c'est-à-dire de la requête Q transmise pour test). Une telle technique de reconstruction préalable de la requête Q permet de limiter l'adjonction des données non pertinente lors de la détection. Par exemple, si la requête Q correspond partiellement à une image d'origine X connue (partiellement signifie que la requête Q est par exemple tronquée pour ne montrer qu'une portion de l'image d'origine X ou qu'une portion de Q appartient à X), les inventeurs ont proposé de reconstruire les parties manquantes de l'image Q avant la détection. Plus particulièrement, cette reconstruction consiste, dans un mode de réalisation, à utiliser l'estimation du recalage géométrique (délivrant une transformation) pour appliquer cette transformation et sa réciproque à l'image originale. On obtient ainsi une image originale altérée ayant subi les mêmes pertes supposées que l'image requête Q (zones manquantes à cause d'un découpage, hautes fréquences manquantes à cause d'une réduction de dimension). En soustrayant cette image originale altérée à l'image originale, on obtient une image "complétant" l'image requête Q dans les zones où l'on sait que le tatouage est absent. Du fait de l'orthogonalité du signal de marquage avec l'image originale, on limite ainsi l'ajout de bruit dans la détection du tatouage tout en permettant une détection plus intelligente et plus pertinente en cas de contrefaçon de contenus.

Techniquement, afin d'améliorer encore la détection, le contenu original est utilisé dans l'étape de synchronisation pour remplir les parties manquantes du contenu de la requête, dans le domaine spatial ou fréquentiel. En effet, une fois la requête est synchronisée pour correspondre au contenu d'origine, le système dispose d'informations partielles sur les parties du signal qui sont entièrement absentes de la requête ou qui ont été lissées en raison d'un rééchantillonnage.

Par exemple, si le contenu d'origine est une image haute résolution et que la requête est un extrait partiel de basse résolution, l'étape de synchronisation fournit des connaissances sur les parties du contenu original qui sont totalement absentes de la requête, et que les parties communes ne comprennent pas les composants à haute fréquence. Par conséquent, parmi tous les choix possibles complétude, il est utile de remplir les parties manquantes dans la requête avec un signal qui n'introduira pas de bruit supplémentaire dans la détection du tatouage.

Comme le signal de tatouage est orthogonal au signal original, l'utilisation du signal d'origine pour remplir les parties manquantes entrainera une absence de corrélation dans l'espace de tatouage, réduisant le bruit introduit par des parties manquantes au seul bruit dû à la perte du signal de tatouage dans ces régions. Ainsi, la détection du tatouage est réalisée sur le contenu de la requête défini comme :

$$Q = X - g\,(g-1\,(X)) + g\,(R),$$

où R est le contenu reçu (la requête), et g est la transformation structurelle et fréquentielle estimée en fonction du contenu (de la requête) R et du contenu original X, et g-1 l'inverse ou pseudo-inverse de cette transformation g.

Grâce à cette technique, on améliore grandement la qualité de la détection tout en limitant les risques de faux positifs.

5.5. Dispositifs de mise en oeuvre

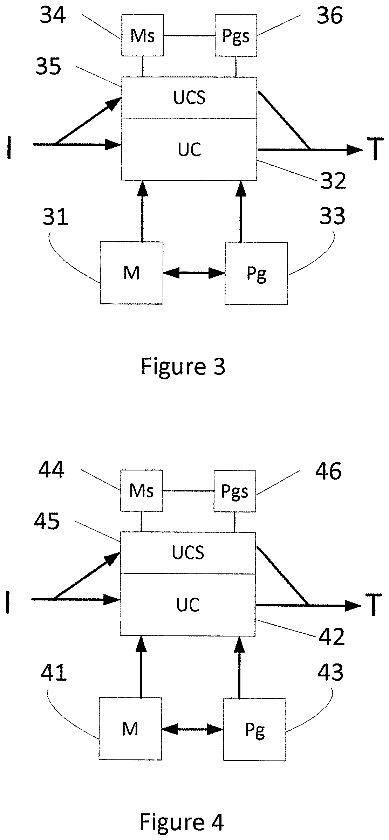

On décrit, en relation avec la figure 3, un dispositif d'enregistrement de contenus multimédia mis en oeuvre pour gérer l'enregistrement et le marquage de contenus multimédias à protéger, selon le procédé décrit préalablement.

Par exemple, le dispositif d'enregistrement de contenus multimédia comprend une mémoire 31 comprenant par exemple une mémoire tampon, un processeur de traitement général 32, équipée par exemple d'un microprocesseur, et pilotée par un programme d'ordinateur 33, et/ou une mémoire sécurisée 34, un processeur de traitement sécurisé 35, pilotée par un programme d'ordinateur 36, ces unités de traitement mettant en oeuvre des procédés de traitement de données tels que décrits précédemment pour effectuer l'enregistrement et le marquage de contenus multimédia à protéger.

À l'initialisation, les instructions de code du programme d'ordinateur 36 sont par exemple chargées dans une mémoire avant d'être exécutées par le processeur de traitement sécurisé 35. Le processeur de traitement 35 reçoit en entrée au moins un contenu multimédia à protéger. Le processeur de traitement sécurisé 35 met en oeuvre les étapes du procédé d'enregistrement, selon les instructions du programme d'ordinateur 36 pour générer une représentation de contenus, obtenir un identifiant unique de ce contenu, obtenir une clé secrète de tatouage et enregistrer ces données en base et tatouer le contenu numérique.

Pour cela, le dispositif d'enregistrement de contenus multimédia comprend, outre la mémoire 34, des moyens de communications, tels que des modules de communication réseau, des moyens de transmission de donnée et des circuits de transmission de données entre les divers composants du dispositif d'enregistrement de contenus multimédia et des moyens d'accès, en lecture et écriture, à au moins une base de données.

Les moyens précédemment décrits peuvent se présenter sous la forme d'un processeur particulier implémenté au sein d'un terminal, tel qu'un terminal de communication. Selon un mode de réalisation particulier, le dispositif d'enregistrement de contenus multimédia met en oeuvre une application particulière qui est en charge de la réalisation des opérations précédemment décrites, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

On décrit, en relation avec la figure 4, un dispositif de vérification de contenus multimédia mis en oeuvre pour gérer la vérification et la détection de contenus potentiellement contrefaisants, selon le procédé décrit préalablement.

Par exemple, le dispositif de vérification de contenus multimédia comprend une mémoire 41 comprenant par exemple une mémoire tampon, un processeur de traitement général 42, équipée par exemple d'un microprocesseur, et pilotée par un programme d'ordinateur 43, et/ou une mémoire sécurisée 44, un processeur de traitement sécurisé 45, pilotée par un programme d'ordinateur 46, ces unités de traitement mettant en oeuvre des procédés de traitement de données tels que décrits précédemment pour effectuer la vérification d'un contenu courant, vérification qui est basée sur une représentation du contenu courant, comparée aux représentations des contenus enregistrés et sur la vérification de la présence d'un tatouage sur la base d'une clé secrète accompagnant chaque représentation.

À l'initialisation, les instructions de code du programme d'ordinateur 46 sont par exemple chargées dans une mémoire avant d'être exécutées par le processeur de traitement sécurisé 45. Le processeur de traitement 45 reçoit en entrée au moins un contenu multimédia. Le processeur de traitement sécurisé 45 met en oeuvre les étapes du procédé de traitement, selon les instructions du programme d'ordinateur 46 pour obtenir des représentations à partir d'une base de données et détecter un éventuel tatouage numérique dans cette représentation.

Pour cela, le dispositif de vérification de contenus multimédia comprend, outre la mémoire 44, des moyens de communications, tels que des modules de communication réseau, des moyens de transmission de donnée et des circuits de transmission de données entre les divers composants du dispositif de vérification de contenus multimédia et des moyens d'accès, en lecture, à une base de données d'enregistrement.

Les moyens précédemment décrits peuvent se présenter sous la forme d'un processeur particulier implémenté au sein d'un terminal, tel qu'un terminal de paiement. Selon un mode de réalisation particulier, le dispositif de vérification de contenus multimédia met en oeuvre une application particulière qui est en charge de la réalisation des opérations précédemment décrites, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

## Revendications

1. Procédé d'enregistrement d'un contenu multimédia à protéger, procédé mis en oeuvre au sein d'un dispositif électronique d'enregistrement de contenus multimédia, ledit dispositif électronique comprenant des moyens de traitement de données multimédia, procédé comprenant :

   - une étape de réception (A10) d'un contenu multimédia (X)
   - une étape d'obtention (A20) d'une représentation $(R_X)$ dudit contenu multimédia (X) ladite représentation $(R_X)$ étant issue d'au moins une transformation opérée sur ledit contenu multimédia (X) ;
   - une étape d'obtention (A30) d'un identifiant unique $(ID_X)$ associé audit contenu multimédia (X)
   - une étape d'obtention (A60) d'au moins une donnée descriptive $(DD_X)$ associée audit contenu multimédia, ladite d'au moins une donnée descriptive $(DD_X)$ comprenant des données descriptives à caractère permanente et des données descriptives à caractère temporaire ;
   - une étape d'obtention (A40) d'une clé secrète (K) dudit contenu multimédia par l'intermédiaire d'une fonction de hachage prenant en paramètre les données descriptives à caractère permanente et un vecteur aléatoire ;
   - une étape de tatouage (A50) dudit contenu multimédia (X) à l'aide d'une clé secrète (K), délivrant un contenu tatoué $(X_T)$ ;
   - une étape d'insertion (A70), au sein d'une base de données (P), d'au moins une donnée constitutive dudit tatouage et de ladite au moins une donnée descriptive $(DD_X)$, ladite donnée constitutive dudit tatouage comprenant l'identifiant unique $(ID_X)$, la représentation $(R_X)$ et la clé secrète (K) ;
   - une étape d'insertion, dans une base de données descriptives, de ladite au moins une donnée descriptive $(DD_X)$ associée audit contenu multimédia, de ladite clé secrète (K) lesdites données à caractère permanent et de ladite clé secrète (K) étant accessibles uniquement en lecture.

2. Procédé d'enregistrement selon la revendication 1, **caractérisé en ce que** l'étape d'insertion, au sein de la base de données (P), comprend l'insertion d'un enregistrement comprenant ledit identifiant unique, ladite représentation et ladite clé secrète.

3. Procédé d'enregistrement selon la revendication 1, **caractérisé en ce que** ladite étape de tatouage dudit contenu multimédia met en oeuvre un tatouage dit *« zéro bit ».*

4. Procédé d'enregistrement selon la revendication 1 **caractérisé en ce que** l'étape d'insertion, au sein de la table d'enregistrement de contenus de la base de données, comprend l'insertion d'au moins une partie du contenu multimédia.

5. Procédé d'enregistrement selon la revendication 1, **caractérisé en ce que** l'étape de tatouage comprend une étape de modulation d'un signal de tatouage en fonction d'un signal représentatif du contenu multimédia.

6. Procédé selon l'une des revendications 1 à 5, comprenant en outre l'obtention d'une donnée descriptive associée à un contenu multimédia (Q) dans lequel l'obtention de la donnée descriptive associée audit contenu multimédia (Q) est mis en oeuvre par un dispositif électronique de vérification de contenu multimédia, ledit dispositif électronique comprenant des moyens de traitement de données multimédia, et comprenant :

   - calcul (B10) d'une représentation $(R_Q)$ du contenu (Q);
   - recherche (B20), au sein d'une base de données (P), des représentations les plus proches de la représentation $(R_Q)$ du contenu (Q), recherche délivrant une liste ordonnée d'identifiants de représentations candidates les plus proches $(ID_1, \cdots, ID_L)$ ;
   - pour chaque contenu candidat de la liste ordonnée précédemment obtenue, une étape de détection (B30), au sein du contenu (Q) d'un tatouage numérique correspondant à l'un des tatouages numériques des contenus de la liste $(ID_1, \cdots, ID_L)$, en fonction de clés de tatouage associées aux contenus de la liste $(ID_1, \cdots, ID_L)$ ; et

   - lorsque la détection est positive, pour un contenu de la liste des contenus, transmission (B31) d'au moins une portion des données descriptives $(D_N)$ du contenu auquel le tatouage du contenu (Q) correspond ;
   - lorsque la détection est négative pour toutes les contenus de la liste des contenus, transmission (B32) d'un message absence du contenu (Q).

7. Procédé d'obtention selon la revendication 6, **caractérisé en ce que** ledit contenu multimédia (Q) étant une image, l'étape de détection au sein de l'image (Q), d'un tatouage numérique des images de la liste $(ID_1, \cdots, ID_L)$ comprend, pour une image courante :

- obtention de la clé secrète correspondant à l'identifiant de l'image courante ;
- optionnellement, réalignement de l'image (Q) en fonction des éléments structurels de la représentation de l'image courante ;
- détection du tatouage à l'aide de la clé secrète correspondant à l'image courante et optionnellement de l'image courante.

8. Procédé d'obtention selon la revendication 7, **caractérisé en ce que** l'étape de réalignement de l'image (Q) en fonction des éléments structurels de la représentation de l'image courante comprend l'insertion, dans ladite image (Q), d'au moins une partie de ladite image courante, insertion réalisée en fonction d'éventuelles parties manquantes de ladite image (Q) par rapport à ladite image courante ;

9. Dispositif électronique d'enregistrement d'un contenu multimédia à protéger, ledit dispositif électronique comprenant des moyens de traitement de données multimédia, dispositif comprenant :

- des moyens de réception d'un contenu multimédia (X) ;
- des moyens d'obtention d'un identifiant unique ($ID_X$) associé audit contenu multimédia ;
- des moyens d'obtention d'une représentation ($R_X$) dudit contenu multimédia, ladite représentation étant issue d'au moins une transformation ;
- des moyens d'obtention d'au moins une donnée descriptive ($DD_X$) associée audit contenu multimédia,
ladite d'au moins une donnée descriptive comprenant des données descriptives à caractère permanente et des données descriptives à caractère temporaire ;
- des moyens d'obtention d'une clé secrète (K) dudit contenu multimédia, par l'intermédiaire d'une fonction de hachage prenant en paramètre les données descriptives à caractère permanente et un vecteur aléatoire ;
- des moyens de tatouage dudit contenu multimédia à l'aide de la clé secrète (K) ;
- des moyens d'insertion, au sein d'une base de données (P), d'au moins une donnée constitutive dudit tatouage et de ladite au moins une donnée descriptive ($DD_X$), ladite donnée constitutive dudit tatouage comprenant l'identifiant unique ($ID_x$), la représentation ($R_{X)}$ et la clé secrète (K) ;
- des moyens d'insertion, dans une base de données descriptives, de ladite au moins une donnée descriptive ($DD_X$) associée audit contenu multimédia (X), de ladite clé secrète (K) lesdites données à caractère permanent et de ladite clé secrète (K) étant accessibles uniquement en lecture.

10. Système comprenant un premier dispositif selon la revendication 9 et un deuxième dispositif d'obtention d'une donnée descriptive associée à un contenu multimédia (Q) ledit deuxième dispositif électronique comprenant : des moyens de traitement de données multimédia; des moyens de calcul d'une représentation ($R_Q$) du contenu (Q);

- des moyens de recherche, au sein d'une structure d'indexation, des représentations (R) les plus proches de la représentation ($R_Q$) du contenu (Q), recherche délivrant une liste ordonnée d'identifiants de représentations candidates les plus proches ($ID_1, \cdots, ID_L$) ;
- des moyens de détection, au sein du contenu (Q) d'un tatouage numérique correspondant à l'un des tatouages numériques des contenus de la liste ($ID_1, \cdots, ID_L$) ; et

- des moyens de transmission d'au moins une portion des données descriptives ($D_N$) du contenu auquel le tatouage du contenu (Q) correspond, moyens mis en oeuvre lorsque la détection est positive, pour un contenu de la liste des contenus ;
- des moyens transmission d'un message absence du contenu (Q), moyens mis en oeuvre lorsque la détection est négative pour toutes les contenus de la liste des contenus.

11. Produit programme d'ordinateur téléchargeable depuis un réseau de communication et/ou stocké sur un support lisible par ordinateur et/ou exécutable par un microprocesseur, le produit programme d'ordinateur comportant des instructions de code de programme pour l'exécution d'un procédé d'enregistrement selon l'une quelconque des revendications 1 à 8 lorsqu'il est exécuté sur un processeur.

## Patentansprüche

1. Verfahren zur Aufzeichnung eines zu schützenden Multimedia-Inhalts, wobei das Verfahren in einer elektronischen Vorrichtung zur Aufzeichnung von Multimedia-Inhalten umgesetzt wird, wobei die elektronische Vorrichtung Mittel zur Verarbeitung von Multimedia-Daten umfasst, wobei das Verfahren umfasst:

- einen Schritt des Empfangs (A10) eines Multimedia-Inhalts (X);
- einen Schritt des Erhaltens (A20) einer Darstellung (RX) des Multimedia-Inhalts (X), wobei die Darstellung (RX) aus mindestens einer Transformation, die am Multimedia-Inhalt (X) vorgenommen wurde, stammt;
- einen Schritt des Erhaltens (A30) eines einzigen Identifikators (IDx), der dem Multimedia-Inhalt (X) zugeordnet ist;
- einen Schritt des Erhaltens (A60) mindestens eines beschreibenden Datums (DDX), das dem Multimedia-Inhalt zugeordnet ist, wobei das mindestens eine beschreibende Datum (DDX) beschreibende Daten mit permanentem Charakter und beschreibende Daten mit temporärem Charakter umfasst;
- einen Schritt des Erhaltens (A40) eines Geheimschlüssels (K) des Multimedia-Inhalts über eine Hash-Funktion, die als Parameter die beschreibenden Daten mit permanentem Charakter und einen Zufallsvektor heranzieht;
- einen Schritt des Markierens (A50) des Multimedia-Inhalts (X) mit Hilfe eines Geheimschlüssels (K), der einen markierten Inhalt (XT) liefert;
- einen Schritt des Einsetzens (A70), in eine Datenbank (P), mindestens eines die Markierung bildenden Datums, und des mindestens einen beschreibenden Datums (DDX), wobei das die Markierung bildende Datum den einzigen Identifikator (IDX), die Darstellung (RX) und den Geheimschlüssel (K) umfasst;
- einen Schritt des Einsetzens, in eine Bank von beschreibenden Daten, des mindestens einen beschreibenden Datums (DDX), das dem Multimedia-Inhalt zugeordnet ist, des Geheimschlüssels (K), wobei die Daten mit permanentem Charakter und der Geheimschlüssel (K) schreibgeschützt sind.

2. Aufzeichnungsverfahren nach Anspruch 1, **dadurch gekennzeichnet, dass** der Schritt des Einsetzens in die Datenbank (P) das Einsetzen einer Aufzeichnung, umfassend den einzigen Identifikator, die Darstellung und den Geheimschlüssel, umfasst.

3. Aufzeichnungsverfahren nach Anspruch 1, **dadurch gekennzeichnet, dass** der Schritt der Markierung des Multimedia-Inhalts eine so genannte "Null-Bit" Markierung einsetzt.

4. Aufzeichnungsverfahren nach Anspruch 1, **dadurch gekennzeichnet, dass** der Schritt des Einsetzens in die Tabelle zur Aufzeichnung von Inhalten der Datenbank das Einsetzen mindestens eines Teils des Multimedia-Inhalts umfasst.

5. Aufzeichnungsverfahren nach Anspruch 1, **dadurch gekennzeichnet, dass** der Markierungsschritt einen Schritt der Modulation eines Markierungssignals in Abhängigkeit von einem für den Multimedia-Inhalt repräsentativen Signals umfasst.

6. Verfahren nach einem der Ansprüche 1 bis 5, ferner umfassend das Erhalten eines beschreibenden Datums, das einem Multimedia-Inhalt (Q) zugeordnet ist, wobei das Erhalten des dem Multimedia-Inhalt (Q) zugeordneten beschreibenden Datums von einer elektronischen Vorrichtung zur Überprüfung von Multimedia-Inhalten umgesetzt wird, umfassend:

    - Berechnung (B10) einer Darstellung (RQ) des Inhalts (Q);
    - Suche (B20), in einer Datenbank (P), der nächsten Darstellungen der Darstellung (RQ) des Inhalts (Q), wobei die Suche eine geordnete Liste von Identifikatoren von nächsten Kandidaten-Darstellungen (ID1, ..., IDL) liefert;
    - für jeden Kandidateninhalt der vorher erhaltenen geordneten Liste einen Schritt der Erfassung (B30), in dem Inhalt (Q), einer digitalen Markierung entsprechend einer der digitalen Markierungen der Inhalte der Liste (ID1, ..., IDL) in Abhängigkeit von Markierungsschlüsseln, die den Inhalten der Liste (ID1, ..., IDL) zugeordnet sind, und
    - wenn die Erfassung für einen Inhalt der Liste der Inhalte positiv ist, Übertragung (B31) mindestens eines Abschnitts der beschreibenden Daten (DN) des Inhalts, dem die Markierung des Inhalts (Q) entspricht;
    - wenn die Erfassung für alle Inhalte der Liste der Inhalte negativ ist, Übertragung (B32) einer Botschaft ohne Inhalt (Q).

7. Verfahren zum Erhalten nach Anspruch 6, **dadurch gekennzeichnet, dass**, wobei der Multimedia-Inhalt ein Bild ist, der Schritt der Erfassung, in dem Bild (Q), einer digitalen Markierung der Bilder der Liste (ID1, ..., IDL) für ein laufendes Bild umfasst:

    - Erhalten des Geheimschlüssels entsprechend dem Identifikator des laufenden Bildes;
    - optional die Neuausrichtung des Bildes (Q) in Abhängigkeit von den strukturellen Elementen der Darstellung des laufenden Bildes;
    - Erfassung der Markierung mit Hilfe des Geheimschlüssels entsprechend dem laufenden Bild und optional des laufenden Bildes.

8. Verfahren zum Erhalten nach Anspruch 7, **dadurch gekennzeichnet, dass** der Schritt der Neuausrichtung des Bildes (Q) in Abhängigkeit von den strukturellen Elementen der Darstellung des laufenden Bildes das Einsetzen mindestens eines Teils des laufenden Bildes in das Bild (Q) umfasst, wobei das Einsetzen in Abhängigkeit von möglichen fehlenden Teilen des Bildes (Q) im Vergleich mit dem laufenden Bild erfolgt.

9. Elektronische Vorrichtung zum Aufzeichnen eines zu schützenden Multimedia-Inhalts, wobei die elektronische Vorrichtung Mittel zur Verarbeitung von Multimedia-Daten umfasst, wobei die Vorrichtung umfasst:

- Mittel zum Empfangen eines Multimedia-Inhalts (X);
- Mittel zum Erhalten eines einzigen Identifikators (IDX), der dem Multimedia-Inhalt zugeordnet ist;
- Mittel zum Erhalten einer Darstellung (RX) des Multimedia-Inhalts, wobei die Darstellung aus mindestens einer Transformation hervorgeht;
- Mittel zum Erhalten mindestens eines beschreibenden Datums (DDX), das dem Multimedia-Inhalt zugeordnet ist,

wobei das mindestens eine beschreibende Datum beschreibende Daten mit permanentem Charakter und beschreibende Daten mit temporärem Charakter umfasst;

- Mittel zum Erhalten eines Geheimschlüssels (K) des Multimedia-Inhalts über eine Hash-Funktion, die als Parameter die beschreibenden Daten mit permanentem Charakter und einen Zufallsvektor heranzieht;
- Mittel zum Markieren des Multimedia-Inhalts mit Hilfe des Geheimschlüssels (K);
- Mittel zum Einsetzen, in eine Datenbank (P), mindestens eines die Markierung bildenden Datums und des mindestens einen beschreibenden Datums (DDX), wobei das die Markierung bildende Datum den einzigen Identifikator (IDX), die Darstellung (RX) und den Geheimschlüssel (K) umfasst;
- Mittel zum Einsetzen, in eine Datenbank von beschreibenden Daten, des mindestens einen dem Multimedia-Inhalt (X) zugeordneten beschreibenden Datums (DDX), des Geheimschlüssels (K), wobei die Daten mit permanentem Charakter und der Geheimschlüssel (K) schreibgeschützt sind.

10. System, umfassend eine erste Vorrichtung nach Anspruch 9 und eine zweite Vorrichtung zum Erhalten eines einem Multimedia-Inhalt (Q) zugeordneten Datums, wobei die zweite elektronische Vorrichtung umfasst:

- Mittel zur Verarbeitung von Multimedia-Daten;
- Mittel zur Berechnung einer Darstellung (RQ) des Inhalts (Q);
- Mittel zum Suchen, in einer Indexierungsstruktur, der nächsten Darstellungen (R) des Inhalts (Q), wobei die Suche eine geordnete Liste von Identifikatoren der nächsten Kandidaten-Darstellungen (ID1, ..., IDL) liefert;

- Mittel zur Erfassung, in dem Inhalt (Q), einer digitalen Markierung entsprechend einer der digitalen Markierungen der Inhalte der Liste (ID1, ..., IDL); und
- Mittel zur Übertragung mindestens eines Abschnitts der beschreibenden Daten (DN) des Inhalts, dem die Markierung des Inhalts (Q) entspricht, wobei die Mittel eingesetzt werden, wenn die Erfassung positiv für einen Inhalt der Liste der Inhalte ist;
- Mittel zur Übertragung einer Botschaft ohne Inhalt (Q), wobei die Mittel eingesetzt werden, wenn die Erfassung für alle Inhalte der Liste der Inhalte negativ ist.

11. Computerprogrammprodukt, das von einem Kommunikationsnetz heruntergeladen und/oder auf einem von einem Computer lesbaren Träger gespeichert und/oder von einem Mikroprozessor ausgeführt werden kann, wobei das Computerprogrammprodukt Programmcodebefehle für die Ausführung eines Aufzeichnungsverfahrens nach einem der Ansprüche 1 bis 8 umfasst, wenn es von einem Prozessor ausgeführt wird.

**Claims**

1. Method for recording a multimedia content to be protected within an electronic device for the recording of multimedia contents, said electronic device comprising means for processing multimedia data, method comprises:

- a step for receiving (A10) a multimedia content (X);
- a step for obtaining (A20) a representation $(R_X)$ of said multimedia content (X), said representation $(R_X)$ coming from a transformation carried out on said multimedia content (X);
- a step for obtaining (A30) a unique identifier $(ID_X)$ associated with said multimedia content (X);
- a step for obtaining (A60) at least one piece of descriptive data $(DD_X)$ associated with said multimedia content, said at least one piece of descriptive data (DDx) comprising descriptive data of a permanent nature and descriptive data of a temporary nature;
- a step for obtaining (A40) a secret key (K) of said multimedia content by means of a hash function taking as parameters descriptive data of a permanent nature and a random vector;
- a step for watermarking (A50) said multimedia content (X) by means of a secret key (K), delivering a watermarked content $(X_T)$;
- a step of insertion (A70), within a data base (P), of at least one piece of data constituting said watermark and said at least one piece of descriptive data ($DD_X$), said data constituting said watermark comprising said unique identifier ($ID_X$), representation ($R_x$) and secret key (K);
- a step of insertion, in a descriptive database, of said at least one piece of descriptive data ($DD_x$) associated with said multimedia content, of said secret key (K) said data of a permanent nature and of said secret key (K) being available for reading only.

2. Method of recording according to claim 1, **characterized in** the step of insertion, within the data base (P), comprises the insertion of a record comprising said unique identifier, said representation and said secret key.

3. Method of recording according to claim 1, **characterized in that** said step for watermarking said multimedia content implements a "zero bit" watermarking.

4. Method of recording according to claim 1 **characterized in that** the step of insertion, within the table for recording the contents of the data base, comprises the insertion of at least one part of the multimedia content.

5. Method of recording according to claim 1, **characterized in that** the watermarking step comprises a step for modulating a watermarking signal as a function of a signal representing the multimedia content.

6. Method according to one of claims 1 to 5, further comprising obtaining descriptive data associated with a multimedia content (Q) in which obtaining the descriptive data associated with said multimedia content (Q) is carried out by an electronic device for verifying multimedia contents, said electronic device comprising means for processing multimedia data, and comprising :

   - computing (B10) a representation ($R_Q$) of the content (Q).
   - searching (820), within a data base (P), for the representations closest to the representation ($R_Q$) of the content (Q), the search delivering an ordered list of identifiers of the closest candidate representations ($ID_1,\cdots,ID_L$);
   - for each candidate content of the previously obtained ordered list, a step for the detection (B30), within the content (Q), of a digital watermark corresponding to one of the digital watermarks of the contents of the list ($ID_1,\cdots,ID_L$), as a function of the watermarking keys associated with the contents of the list ($ID_1,\cdots,ID_L$); and

      - when the detection is positive, for one content of the list of contents, transmitting (B31) at least one portion of the descriptive data ($D_n$) of the content to which the watermark of the content (Q) corresponds;
   - when the detection is negative for all the contents of the list of contents, transmitting (B32) a message on absence of content (Q).

7. Method for obtaining according to claim 6, **characterized in that** said multimedia content (Q) being an image, the step for the detection, within the image (Q), of a digital watermark of the images of the list ($ID_1,\cdots,ID_L$) comprises, for a current image:

   - obtaining the secret key corresponding to the identifier of the current image ;
   - optionally, realigning the image (Q) according to the structural elements of the representation of the current image;
   - detecting the watermark by means of the secret key corresponding to the current image and, optionally, by means of the current image.

8. Method for obtaining according to claim 7, **characterized in that** the step for realigning the image (Q) as a function of the structural elements of the representation of the current image comprises the insertion, into said image (Q), of at least one part of said current image, the insertion being carried out as a function of missing parts, if any, of said image (Q) relative to said current image.

9. Electronic device for the recording of a multimedia content to be protected, said electronic device comprising means for processing multimedia data, device comprising:

   - means for receiving a multimedia content (X);
   - means for obtaining a unique identifier ($ID_x$) associated with said multimedia content;
   - means for obtaining a representation ($R_x$) of said multimedia content, said representation coming from at least one transformation;
   - means for obtaining at least one piece of descriptive data ($DD_x$) associated with said multimedia content, said at least one piece of descriptive data comprising descriptive data of a permanent nature and descriptive data of a temporary nature.
   - means for obtaining a secret key (K) of said multimedia content, by means of a hash function taking as parameters descriptive data of a permanent nature and a random vector;
   - means for watermarking said multimedia content by means of a secret key (K);
   - means of insertion, within a data base (P), of at least one piece of descriptive data ($DD_x$), said constitutive data said watermark comprising the unique identifier (IDx), representation ($R_x$) and the secret key (K);
- means of insertion, in a descriptive data base, of said at least one piece of descriptive data associated with said multimedia content (X), of said secret key (K) said data of a permanent nature and of said secret key (K) being available for reading only.

10. System comprising a first device according to claim 9 and a second device for obtaining a piece of descriptive data associated with a multimedia content (Q) said second electronic device comprising: means for processing multimedia data;

- means for computing a representation ($R_Q$) of the content (Q);
- means for making a search, within an indexing structure, for the representations (R) closest to the representation ($R_Q$) of the content (Q), the search delivering an ordered list of identifiers of the closest candidate representation ($ID_1, \cdots, ID_L$);
- means of detection, within the content (Q), of a digital watermark corresponding to one of the digital watermarks of the contents of the list ($ID_1, \cdots, ID_L$); and
- means of transmission of at least one portion of descriptive data ($D_n$) of the content to which the watermark of the content (Q) corresponds, means implemented when the detection is positive, for a content of the list of contents;
- means of transmission of a message on an absence of contents (Q), means implemented when the detection is negative for all the contents of the list of contents.

11. Computer program product downloadable from a communications network and/or stored on a computer-readable carrier and/or executable by a microprocessor, the computer program product comprising program code instructions for the execution of a method of recording according to at any one of the claims 1 to 8 when it is executed on a processor.

Figure 1

Figure 2

Figure 3

Figure 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2860378 A1